# EUROPÄISCHE PATENTSCHRIFT

(11) **EP 2 610 114 B1**
(45) Veröffentlichungstag und Bekanntmachung des Hinweises auf die Patenterteilung: **05.09.2018**
(21) Anmeldenummer: 12197987.6
(22) Anmeldetag: 19.12.2012
(51) Int. Cl.: G01S 15/93, B60R 19/48, B60R 11/04, B60J 5/04, G10K 11/00

(54) **Haltevorrichtung zur Aufnahme und Befestigung einer Elektronikeinheit hinter einem Verkleidungsteil eines Kraftfahrzeuges sowie ein entsprechendes Verkleidungsteil mit einer Haltevorrichtung**
Holding device for holding and securing an electronic unit behind a trim part of a motor vehicle and a corresponding trim with a holding device
Dispositif de retenue pour la réception et la fixation d'une unité électronique derrière un élément d'habillage d'un véhicule automobile et un élément d'habillage correspondant doté d'un dispositif de retenue

(30) Priorität: 28.12.2011 DE 202011052507 U
(43) Veröffentlichungstag der Anmeldung: 03.07.2013
(73) Patentinhaber: REHAU AG + Co, 95111 Rehau (DE)
(72) Erfinder: Uhlig, Nico, 08529 Plauen (DE); Klärner, Mathias, 08525 Plauen (DE); Hörz, Steffen, 70794 Filderstadt (DE); Benzinger, Rolf, 71139 Ehningen (DE)

(56) Entgegenhaltungen:
- EP-A1- 1 371 952
- DE-A1- 10 347 098
- DE-A1- 19 621 964

## Beschreibung

Die vorliegende Erfindung betrifft eine Haltevorrichtung aus einem polymeren Werkstoff zur Aufnahme und Befestigung einer Elektronikeinheit hinter einem aus einem polymeren Werkstoff gebildeten Verkleidungsteil eines Kraftfahrzeuges, mit einem Aufnahmeabschnitt aufweisend mindestens ein Befestigungsmittel zur Befestigung der Elektronikeinheit in oder an dem Aufnahmeabschnitt, mindestens einem neben dem Aufnahmeabschnitt angeordneten Fügeabschnitt mit einem Fügebereich über den der Aufnahmeabschnitt mit der der Sichtseite gegenüberliegenden Innenseite des Verkleidungsteils verbindbar ist, wobei der Fügeabschnitt ferner ein Verbindungselement zu dem Aufnahmeabschnitt aufweist, das so ausgebildet ist, dass die Elektronikeinheit im Montagezustand der Haltevorrichtung einen definierten Mindestabstand zu der Innenseite des Verkleidungsteils aufweist. Zur Integration von Elektronikeinheiten wie beispielsweise Sensoren, Sendern, Messfühlern, Steuergeräten, Kameras oder Radareinheiten, auf der Innenseite von zumeist polymeren Automobilverkleidungsteilen, nutzt man Haltevorrichtungen zur Aufnahme und Befestigung derartiger Elektronikeinheiten. Aufgrund der Tatsache, dass derartige Halterungen bzw. Haltevorrichtungen auf der meist lackierten Außenhaut des Verkleidungsteil zu keinerlei störenden Oberflächenflächenabzeichnungen führen dürfen, können diese nicht zusammen mit dem polymeren Verkleidungsteil einstückig in einem Spritzgussverfahren hergestellt werden, sondern müssen beispielsweise mittels Verklebung oder Verschweißung an der Innenseite des Verkleidungsteils appliziert werden. Die hinter der Innenseite befestigte Elektronikeinheit muss hierbei vor Schlägen und Betriebsschwingungen geschützt, und ein störungsfreier Betrieb der Elektronikeinheit sichergestellt werden. Aus diesem Grunde werden im Stand der Technik (zum Beispiel verbaut in Limousinen-Fahrzeugen der Daimler Benz AG Modell C-Klasse - Baureihe ab 2008) derartige Haltevorrichtungen so ausgestaltet, dass die Elektronikeinheit zu der Innenseite beanstandet ist und betriebsbedingte Verformungen (beispielsweise Schwingungen durch das sog. Flattern der Stoßfängerverkleidung) des Verkleidungsteils von dem Sensor ferngehalten werden.

Mögliche weitere betriebsbedingte Verformungen können wärmedehnungsbedingte Größenänderungen oder Missbrauchsfälle (Parkrempler) sein. EP1371952 A1 beschreibt eine Haltevorrichtung gemäß dem Oberbegriff des Patantanspruchs 1. Nachteilig in der aus dem Stand der Technik bekannten Lösung ist, dass durch die gezielte Einstellung einer Beabstandung der Haltevorrichtung zur Innenseite die Fügeabschnitte aufgrund der Krümmung des Verkleidungsteils relativ weit voneinander beabstandet sind. In Folge einer betriebsbedingten Verformung des Verkleidungsteils, und die hiermit verbundene nach innen gerichtete Deformation des Verkleidungsteils im Bereich zwischen den Fügeabschnitten, wirkt eine Zugbelastung auf die Haltevorrichtung ein, die zum Ablösen der Fügeabschnitte von der Innenseite des Verkleidungsteils führen können. Da die Haltevorrichtung hinter dem Verkleidungsteil angeordnet wird ist das Lösen der Haltevorrichtung dann ggf. nicht erkennbar, so dass entsprechende Sensorsignale falsche Werte liefern ohne, dass dies von einem Nutzer erkannt wird.
Die Erfindung stellt sich daher die Aufgabe eine Haltevorrichtung mit den eingangs beschriebenen Merkmalen anzugeben, die gegenüber dem Stand der Technik einen verbesserte Verbindungsfestigkeit zu einem Verkleidungsteil ermöglicht.
Erfindungsgemäß wird diese Aufgabe dadurch gelöst, dass das das Verbindungselement einen Federungsabschnitt aufweist, der eine Längendehnung des Verbindungselements parallel zur Längserstreckungsrichtung des Verkleidungsteils ermöglicht. Der Federungsabschnitt kompensiert somit die aufgrund der betriebsbedingten Verformung entstehende Zugbelastung auf die Haltevorrichtung, so dass vorteilhafterweise die Fügeabschnitte keine oder eine stark verringerte Zug- und/oder Schälbelastung erfahren.
Vorzugsweise weist der Federungsabschnitt einen U-Förmigen oder einen Wellenförmigen Querschnitt auf. Ein Ü-Förmiger Querschnitt schließt einen V-Förmigen Scherschnitt ein. Wellenförmig meint insbesondere eine Rechteckwelle und/oder Trapezförmige Welle und/oder eine Ziehharmonikawelle, und/oder Mäanderförmige Welle und/oder Dreieckswelle.

Zumindest der Federungsabschnitt kann zudem aus einem weiteren polymeren Werkstoff gebildet sein, wobei der weitere polymere Werkstoff elastischere Materialeigenschaften aufweist als der polymere Werkstoff des Verbindungselements bzw. der gesamten Haltevorrichtung. Die Haltevorrichtung ist in diesem Fall insbesondere in einem Mehrkomponenten-Spritzgussverfahren hergestellt.

An dem Aufnahmeabschnitt kann eine Abweiserblende angeordnet sein, die sich im Montagezustand der Haltevorrichtung zur Innenseite des Verkleidungsteils hin erstreckt und gegenüber dem Aufnahmeabschnitt nach außen gebogen ist, so dass bei einer nach innen gerichteten Deformation des Verkleidungsteils die Abweiserblende nach außen ausweicht. Durch das Vorsehen einer an dem Aufnahmeabschnitt angeordneten Abweiserblende ist zum einen gewährleistet, dass ein Zutritt von störenden Umwelteinflüssen zu der Elektronikeinheit soweit unterbunden wird, dass deren Funktion nicht nachhaltig gestört und beeinträchtigt werden kann. Da sich zum anderen die Abweiserblende im Montagezustand der Haltevorrichtung zur Innenseite des Verkleidungsteils hin erstreckt, ist es vorteilhaft, dass die Abweiserblende gegenüber dem Aufnahmeabschnitt nach außen gebogen ist, so dass bei einer nach innen gerichteten Deformation des Verkleidungsteils die Abweiserblende nach außen ausweicht. Hierbei wird ebenfalls die Fügezone des Fügebereichs zu der Innenseite des Verkleidungsteils entlastet und die Gefahr eines Lösens bzw. Abschälens der Fügezone bzw. des Fügebereiches der Haltevorrichtung von der Innenseite des Verkleidungsteils vermieden.

Insbesondere kann die Abweiserblende in einem Winkel α nach außen abgeknickt sein. Hierbei kann der Winkel α vorzugsweise 10°bis 60°weiter vorzugsweise 20°bis 35°, weiter vorzugsweise 25°bis 32°betragen. Alternativ kann die Abweiserblende mit einem Radius nach außen gebogen sein, vorzugsweise mit einem Wert zwischen 25 mm und 180 mm, weiter vorzugsweise mit einem Wert zwischen 40 mm und 85 mm.

Die Abweiserblende und/oder der Fügeabschnitt und/oder der Federungsabschnitt kann einstückig an den Aufnahmeabschnitt angeformt sein. Insbesondere kann die Haltevorrichtung als einstückiges Spritzgussteil ausgebildet sein. Insbesondere die Herstellung in einem Spritzgussverfahren ermöglicht eine kostengünstige Massenherstellung einer erfindungsgemäßen Haltevorrichtung.

Der Mindestabstand kann im Bereich von 2 mm bis 30 mm, vorzugsweise im Bereich von 5 mm bis 25 mm liegen. Die vorstehend beschriebenen Abstände bzw. Abstandsbereiche stellen optimierte Mindestabstände für Elektronikeinheiten dar, um einen ausreichenden Schutz gegenüber einer einwirkenden Deformation auf das Verkleidungsteil bzw. von Schwingungen des Verkleidungsteils zu gewährleisten.

Zumindest der Fügebereich der erfindungsgemäßen Haltevorrichtung kann aus einem laserverschweißbaren Material, vorzugsweise einem polymeren Material bestehen. Die gesamte Haltevorrichtung kann aus einem laserverschweißbaren polymeren Material bestehen. Alternativ kann die Haltevorrichtung in einem Mehrkomponenten - Spritzgussverfahren hergestellt sein, wobei die Fügebereiche aus einem laserverschweißbaren polymeren Material bestehen. Insbesondere bei großen Stückzahlen ermöglicht eine Laserverschweißung eine kostengünstige und insbesondere schnelle Fügung der Haltevorrichtung mit der Innenseite eines Verkleidungsteils eines Kraftfahrzeugs.

Der Fügebereich und/oder der Federungsabschnitt kann/können eine gegenüber dem Verbindungselement und/oder dem Aufnahmeabschnitt verringerte Wandstärke aufweisen, wobei die reduzierte Wandstärke hierbei vorzugsweise im Bereich von 0,5 mm bis 1,5 mm liegt. Da insbesondere bei einer Verklebung, aber auch bei einer Verschweißung des Fügebereiches mit der Innenseite des Verkleidungsteils, eine dem Fachmann bekannte ausreichende große Kontaktfläche vorliegen muss, führen dickwandige Fügebereiche zu einer entsprechenden Versteifung des Verkleidungsteils im Bereich der Fügezone. Die erfindungsgemäßen Wandstärkenbereiche für den Fügebereich haben sich als die optimierten Parameter bezüglich der Minimierung der negativen versteifenden Wirkung, bei hinreichender Stabilität und Fügbarkeit der Haltevorrichtung ergeben.

Die Wandstärke der Abweiserblende und/oder des Federungsabschnitts liegt/liegen vorzugsweise in einem Bereich von 0,5 mm bis 2,5 mm, weiter vorzugsweise im Bereich 0,7 mm bis 1,5 mm, weiter vorzugsweise im Bereich von 0,8 mm bis 1,3 mm. Diese optimierten Wandstärkenbereiche ermöglichen eine hinreichende Stabilitätbzuhalten, erlauben gleichzeitig jedoch ein Ausweichen der Abweiserblende für den Fall einer Deformation des Verkleidungsteils.

Vorteilhafterweise kann die Abweiserblende im Übergangsbereich zum Aufnahmeabschnitt eine Materialschwächung aufweisen. Die Materialschwächung bewirkt, dass die Abweiserblende noch einfacher der nach innen gerichteten Deformation des Verkleidungsteils ausweichen kann. Die Materialschwächung kann insbesondere eine Materialausdünnung sein.

Weiterhin Teil der Erfindung ist ein Verkleidungsteil mit einer erfindungsgemäßen Haltevorrichtung, insbesondere nach einem der Ansprüche 1 bis 13. Ferner Teil der Erfindung ist ein Verkleidungsteil mit einer erfindungsgemäßen Haltevorrichtung, insbesondere nach einem der Ansprüche 1 bis 13 und einer Elektronikeinheit, wobei die Elektronikeinheit einen Sensor, einen Sender, einen Messfühler, ein Steuergerät, eine Kamera und/oder eine Radareinheit umfasst.

Ein erfindungsgemäßes Verkleidungsteil kann eine Stoßfängerverkleidung oder eine Türverkleidung oder eine Heckklappenverkleidung oder eine Kotflügelverkleidung sein.

### Ausführungsbeispiele

Im Folgenden wird die Erfindung anhand einer lediglich ein Ausführungsbeispiel darstellenden Zeichnung erläutert. Es zeigen schematisch:
- Fig. 1: eine Haltevorrichtung zur Aufnahme und Befestigung einer Elektronikeinheit hinter einem Verkleidungsteil eines Kraftfahrzeuges gemäß des Stands der Technik,
- Fig. 2: einen Schnittdarstellung einer Haltevorrichtung des Stands der Technik,
- Fig. 3: eine dreidimensionale Darstellung einer erfindungsgemäßen Haltevorrichtung zur Aufnahme und Befestigung einer Elektronikeinheit,
- Fig. 4: eine im Einbauzustand hinter einem Verkleidungsteil eines Kraftfahrzeuges dargestellte Haltevorrichtung,
- Fig. 5: eine Schnittdarstellung entlang der in Fig. 4 dargestellten Schnittlinie C-C und mit einer Elektronikeinheit,
- Fig. 6: eine Schnittdarstellung entlang der in Fig. 4 dargestellten Schnittlinie B-B und mit einer Elektronikeinheit,
- Fig. 7a,b: alternative Ausführungsformen der erfindungsgemäßen Haltevorrichtung.

In den Figuren werden gleiche oder funktionsgleiche Elemente mit den gleichen Bezugszeichen versehen.

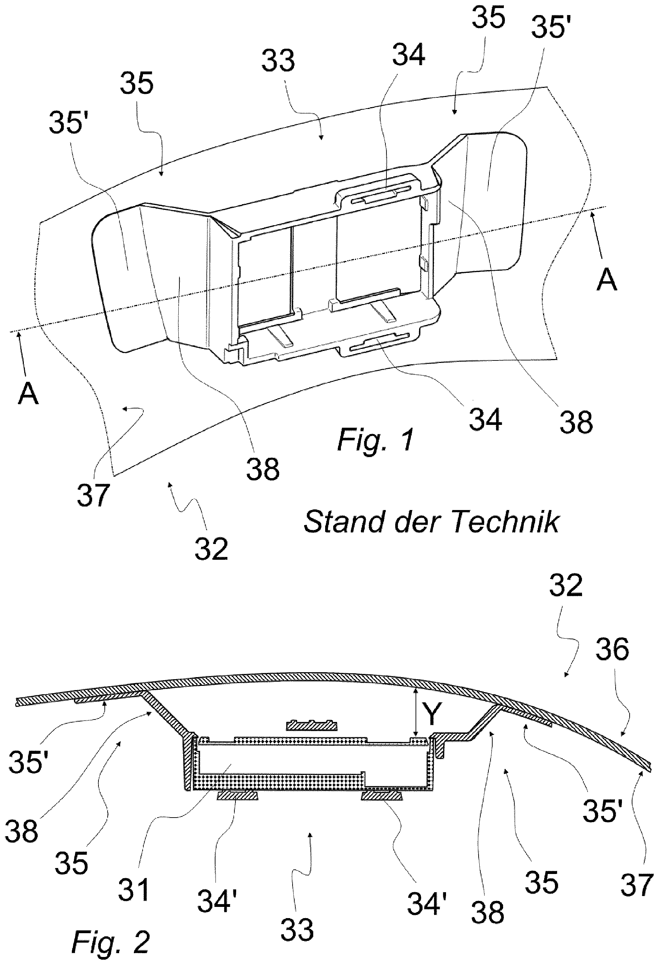

In der Fig. 1 ist eine Haltevorrichtung zur Aufnahme und Befestigung einer Elektronikeinheit 31 hinter einem aus einem polymeren Werkstoff gebildeten Verkleidungsteil 32 eines Kraftfahrzeuges gemäß dem Stand der Technik dargestellt. Die Haltevorrichtung weist einen Aufnahmeabschnitt 33 auf mit Befestigungsmitteln 34 (Aufnahmen für Befestigungsbügel 34') zur Befestigung einer Elektronikeinheit 31 in oder an dem Aufnahmeabschnitt 33. Neben dem Aufnahmeabschnitt 33 sind Fügeabschnitte 35 mit Fügebereichen 35' angeordnet über die der Aufnahmeabschnitt 33 mit einer der Sichtseite 36 gegenüberliegenden Innenseite 37 eines aus einem polymeren Werkstoff gebildeten Verkleidungsteils 32 verbunden ist. Die Fügeabschnitte 35 weisen ferner Verbindungselemente 38 zu dem Aufnahmeabschnitt 33 auf, die so ausgebildet sind, dass die Elektronikeinheit 31 im Montagezustand der Haltevorrichtung einen definierten Mindestabstand Y zu der Innenseite 37 des Verkleidungsteils 32 aufweist.

Die Fig. 2 zeigt eine Schnittdarstellung entlang der in Fig. 1 dargestellten Schnittlinie A-A durch das Verkleidungsteil 32 und die Haltevorrichtung gemäß des Stands der Technik. Der für die möglichst uneingeschränkte Funktionsweise der Elektronikeinheit 31 notwendige Mindestabstand Y zu der Innenseite 37 des Verkleidungsteils 32 sorgt bei einer Haltevorrichtung gemäß des Stands der Technik dafür, dass Schwall- und Spritzwasser bzw. anderweitige Umwelteinflüsse wie Schnee oder Schmutzpartikel von oberhalb über die Innenseite 37 des Verkleidungsteils 32 bzw. die Vorderseite der Elektronikeinheit 31 laufen können und/oder sich dort festsetzen und die Funktionsfähigkeit der Elektronikeinheit 31 stark beeinträchtigen. Zudem sind durch die gezielte Einstellung der Beabstandung Y der Haltevorrichtung zur Innenseite 37 die Fügeabschnitte 35 aufgrund der Krümmung des Verkleidungsteils 32 relativ weit voneinander beabstandet.

In Folge einer betriebsbedingten Verformung des Verkleidungsteils 32, und die hiermit verbundene nach innen gerichtete Deformation des Verkleidungsteils 32 im Bereich zwischen den Fügeabschnitten 35, wirkt eine Zugbelastung auf die Haltevorrichtung ein, die zum Ablösen der Fügeabschnitte 35 von der Innenseite 37 des Verkleidungsteils 32 führen können. Da die Haltevorrichtung hinter dem Verkleidungsteil 32 angeordnet wird ist das Lösen der Haltevorrichtung dann ggf. nicht erkennbar, so dass entsprechende Sensorsignale falsche Werte liefern ohne, dass dies von einem Nutzer erkannt wird.

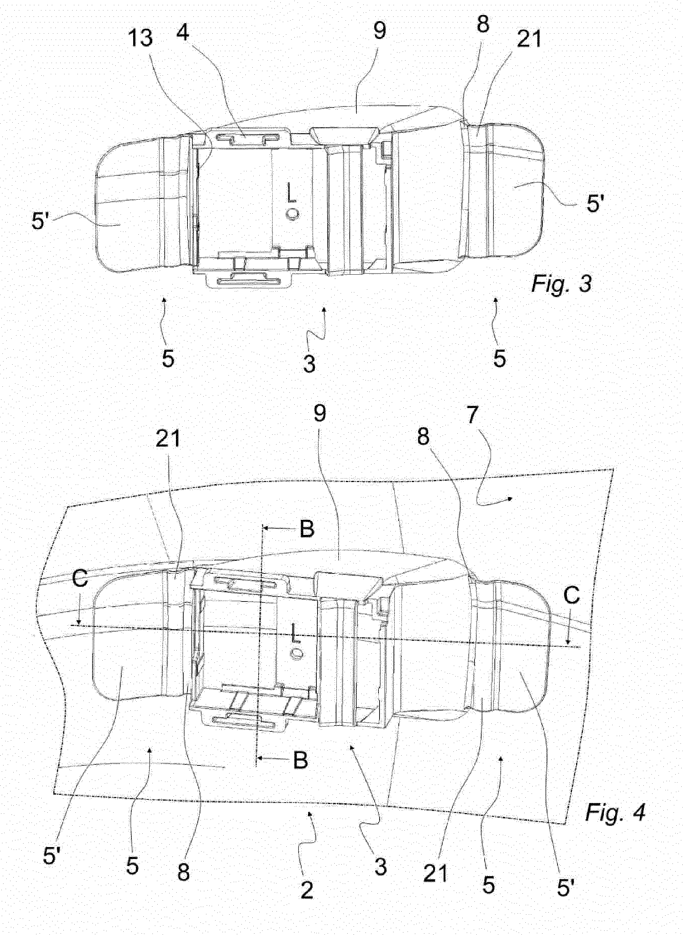

Die in Fig. 3 dargestellte erfindungsgemäße Haltevorrichtung weist demgegenüber ein Verbindungselement 8 mit einem Federungsabschnitt 21 auf, der eine Längendehnung des Verbindungselements 8 parallel zur Längserstreckungsrichtung des Verkleidungsteils 2 ermöglicht. Der Federungsabschnitt 21 weist einen U-Förmigen Querschnitt auf. Alternativ kann der Federungsabschnitt auch einen Wellenförmigen Querschnitt aufweisen. Der Federungsabschnitt 21 kann zudem aus einem weiteren polymeren Werkstoff gebildet sein, wobei der weitere polymere Werkstoff elastischere Materialeigenschaften aufweist als der polymere Werkstoff des Verbindungselements 8 und/oder der Haltevorrichtung. Der Aufnahmeabschnitt 3 weist ferner eine Abweiserblende 9 auf, die sich im Montagezustand der Haltevorrichtung zur Innenseite 7 des Verkleidungsteils 2 hin erstreckt und gegenüber dem Aufnahmeabschnitt 3 nach außen gebogen ist, so dass bei einer nach innengerichteten Deformation des Verkleidungsteils 2 die Abweiserblende noch außen ausweicht. Die Abweiserblende 9 übernimmt dabei zum einen den Schutz vor schädlichen Umwelteinflüssen und gewährleistet dabei gleichzeitig aufgrund der gegenüber dem Aufnahmeabschnitt 3 nach außen (in diesem Fall nach oben) gebogenen Geometrie, dass bei einer nach innengerichteten Deformation des Verkleidungsteils 2 die Abweiserblende 9 nach außen (oben) ausweicht und somit die Haltevorrichtung ebenfalls nicht aufgrund der nach innengerichteten Deformation von der Innenseite des Verkleidungsteils 2 abgelöst bzw. abgeschält werden kann. Um die Positionierung einer hier nicht näher dargestellten Elektronikeinheit 1 innerhalb des Aufnahmeabschnitts 3 zu optimieren sind Zentrierrippen 13 vorgesehen.

In Fig. 4 ist der Einbauzustand der erfindungsgemäßen Haltevorrichtung auf der Innenseite 7 eines Verkleidungsteils 2 dargestellt. Die Haltevorrichtung weist zur Verbindung mit der Innenseite 7 des Verkleidungsteils 2 neben dem Aufnahmeabschnitt 3 angeordnete Fügeabschnitte 5 mit Fügebereichen 5' auf, über die der Aufnahmeabschnitt 3 mit der der Sichtseite 6 gegenüberliegenden Innenseite 7 des Verkleidungsteils verbunden ist.

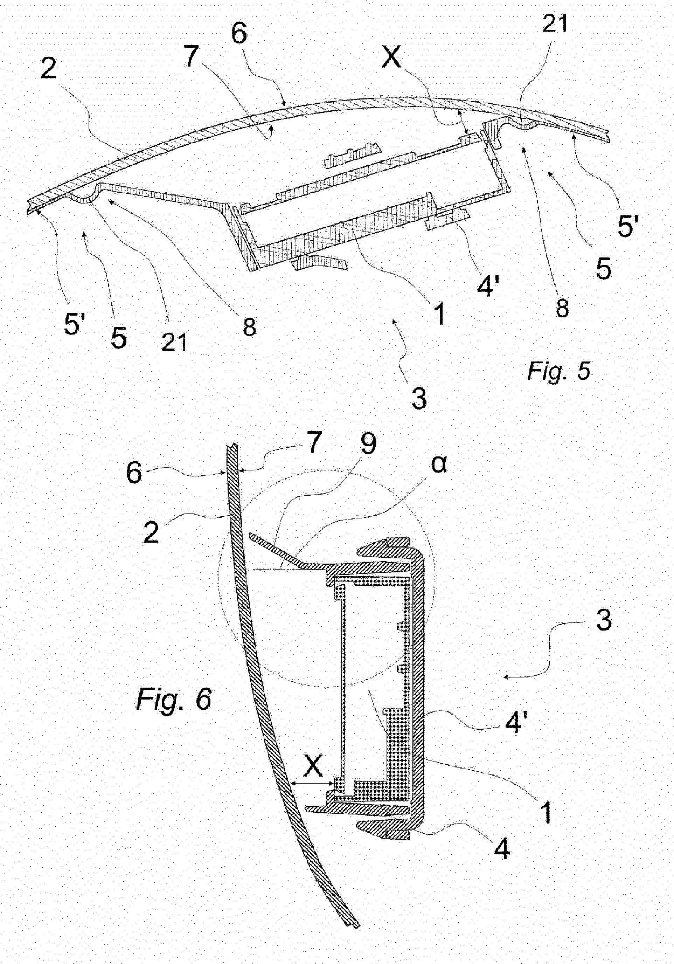

Der Fügeabschnitt 5 ist so ausgebildet, dass er der Innenkontur des Verkleidungsteils zumindest bereichsweise folgt. Der Fügeabschnitt 5 weist ferner Verbindungselemente 8 zu dem Aufnahmeabschnitt 3 auf, die so ausgebildet sind, dass die Elektronikeinheit im Montagezustand der Haltevorrichtung einen definierten Mindestabstand X (vgl. nachfolgende Figur 5) zu der Innenseite 7 des Verkleidungsteils 2 aufweist. Der Federungsabschnitt 21 des Verbindungselements 8 ermöglicht eine Längendehnung des Verbindungselements 8 parallel zur Längserstreckungsrichtung des Verkleidungsteils 2 für den Fall einer nach Innen gerichteten Deformation des Verkleidungsteils 2 im Bereich zwischen den Fügeabschnitten 5.

Die Fig. 5 zeigt eine Schnittdarstellung entlang der Schnittlinie C-C der Fig. 4, wobei hier ergänzend eine Elektronikeinheit 1 in dem dafür vorgesehenen Aufnahmeabschnitt 3 der Haltevorrichtung befestigt ist. Hierzu sind Befestigungsmittel 4 in Form von Aufnahmen für einen Befestigungsbügel 4' vorgesehen, die mittels diverser Rastverbindungen die Elektronikeinheit 1 in der Haltevorrichtung befestigen. Eine entsprechende Schnittdarstellung quer zur Längserstreckungsrichtung der Haltevorrichtung bzw. des Verkleidungsteils 2 (Schnittlinie B-B) mit einer Elektronikeinheit 1 ist in Fig. 6 dargestellt. Das Verbindungselement 8 weist einen im Querschnitt U-Förmigen Federungsabschnitt 21 auf, der eine Längendehnung des Verbindungselements 8 parallel zur Längserstreckungsrichtung des Verkleidungsteils 2 ermöglicht. Die Abweiserblende 9 ist in diesem Ausführungsbeispiel in einem Winkel α nach außen abgeknickt. Der Winkel α beträgt in diesem Fall 30°. Der Wert 0° entspricht einer horizontalen Verlängerung des an die Abweiserblende 9 angrenzenden Aufnahmeabschnitts 3 (vgl. gepunktete Linie in Fig. 6). Die Abweiserblende 9 und der Fügeabschnitt 5 sind einstückig an den Aufnahmeabschnitt 3 angeformt. Die gesamte Haltevorrichtung ist als einstückiges Spritzgussteil ausgebildet (die Ausnahme bildet hierbei der Befestigungsbügel 4' der ein separates Bauteil darstellt - jedoch auch einstückig über z.B. ein Filmscharnier angespritzt sein kann). Der Mindestabstand X der Elektronikeinheit 1 zur Innenseite 7 des Verkleidungsteils 2 liegt im Bereich von 5 mm bis 25 mm. Die Fügebereiche 5' bestehen aus einem laserverschweißbaren polymeren Material. Die Fügebereiche 5' weisen eine gegenüber den Verbindungselementen 8, den Federungsabschnitten 21 und dem Aufnahmeabschnitt 3 verringerte Wandstärke auf, wobei diese reduzierte Wandstärke im Bereich von 0,5 mm bis 1,5 mm liegt. Die Wandstärke der Abweiserblende 9 liegt in einem Bereich von 0,8 mm bis 1,3 mm.

Die Elektronikeinheit 1 umfasst in diesem Ausführungsbeispiel eine Radareinheit, wobei diese Radareinheit eine Nahbereichsradareinheit (NBR) ist. Alternativ kann die Elektronikeinheit 1 einen Sensor, einen Sender, einen Messfühler, ein Steuergerät, eine Kamera, eine Radareinheit, einen Short-Range-Radarsensor, einen Blind-Spot-Monitoring-Sensor, einen Multi-Mode-Sensor und/oder einen Forward-Collision-Warning-Sensor umfassen. Das Verkleidungsteil 2 ist in diesem Ausführungsbeispiel als Stoßfängerverkleidung ausgebildet. Das Material der Stoßfängerverkleidung umfasst Polypropylen (PP) mit Beimengungen von Ethylen-Propylen-Dien-Kautschuk (EPDM). Alternativ kann das Verkleidungsteil 2 auch eine Türverkleidung oder eine Heckklappenverkleidung oder eine Kotflügelverkleidung sein.

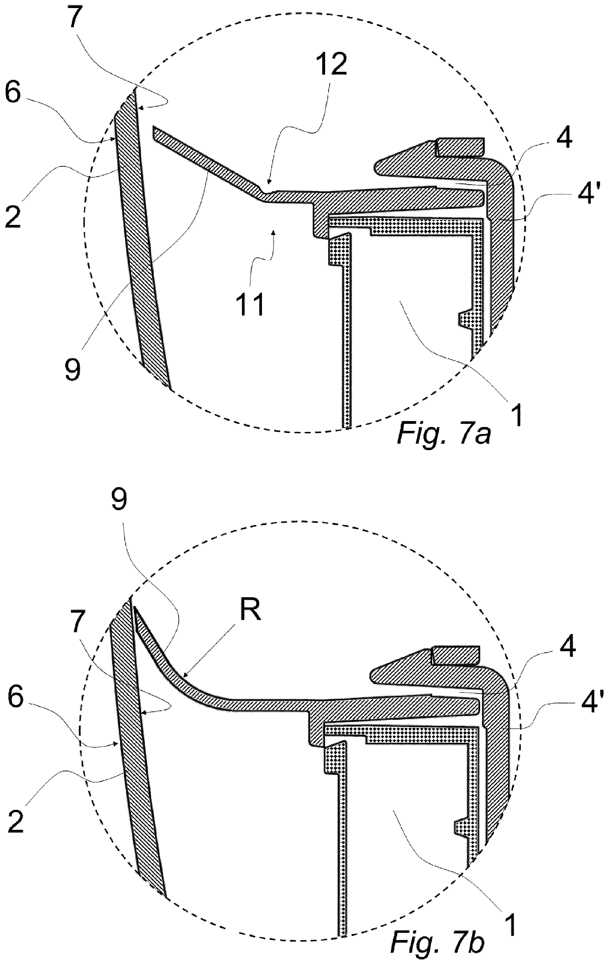

Die Fig. 7a und 7b zeigen alternative Ausführungsformen der erfindungsgemäßen Haltevorrichtung. In Fig. 7a ist im Übergangsbereich 11 der Abweiserblende 9 zum Aufnahmeabschnitt 3 eine Materialschwächung 12 vorgesehen. Die Materialschwächung 12 ermöglicht es der Abweiserblende 9 noch einfacher einer nach innen gerichteten Deformation des Verkleidungsteils 2 zu folgen und nach außen auszuweichen. In Fig. 7b ist die Abweiserblende 9 mit einem Radius R von 60 mm nach außen gebogen. Im Rahmen der Erfindung ist ebenfalls, dass der Radius R nicht konstant ausgebildet ist, sondern sich der Radienverlauf entlang der Abweiserblende 9 kontinuierlich ändert oder wechselt.

## Patentansprüche

1. Haltevorrichtung aus einem polymeren Werkstoff zur Aufnahme und Befestigung einer Elektronikeinheit (1) hinter einem aus einem polymeren Werkstoff gebildeten Verkleidungsteil (2) eines Kraftfahrzeuges, mit:
- einem Aufnahmeabschnitt (3) aufweisend mindestens ein Befestigungsmittel (4) zur Befestigung der Elektronikeinheit (1) in oder an dem Aufnahmeabschnitt (3),
- mindestens einem neben dem Aufnahmeabschnitt (3) angeordneten Fügeabschnitt (5) mit einem Fügebereich (5'), **dadurch gekennzeichnet, dass** der Fügeabschnitt (5) über den der Aufnahmeabschnitt (3) mit der der Sichtseite (6) gegenüberliegenden Innenseite (7) des Verkleidungsteils (2) verbindbar ist,
- wobei der Fügeabschnitt (5) ferner ein Verbindungselement (8) zu dem Aufnahmeabschnitt (3) aufweist, das so ausgebildet ist, dass die Elektronikeinheit (1) im Montagezustand der Haltevorrichtung einen definierten Mindestabstand (X) zu der Innenseite (7) des Verkleidungsteils (2) aufweist, wobei dass das das Verbindungselement (8) einen Federungsabschnitt (21) aufweist, der eine Längendehnung des Verbindungselements (8) parallel zur Längserstreckungsrichtung des Verkleidungsteils (2) ermöglicht.

2. Haltevorrichtung nach Anspruch 1, **dadurch gekennzeichnet, dass** der Federungsabschnitt einen U-förmigen oder einen wellenförmigen Querschnitt aufweist.

3. Haltevorrichtung nach einem der Ansprüche 1 oder 2, **dadurch gekennzeichnet, dass** zumindest der Federungsabschnitt aus einem weiteren polymeren Werkstoff gebildet ist, wobei der weitere polymere Werkstoff elastischere Materialeigenschaften aufweist als der polymere Werkstoff des Verbindungselements.

4. Haltevorrichtung nach einem der vorstehenden Ansprüche, **dadurch gekennzeichnet, dass** an dem Aufnahmeabschnitt (3) eine Abweiserblende (9) angeordnet ist, die sich im Montagezustand der Haltevorrichtung zur Innenseite (7) des Verkleidungsteils (2) hin erstreckt und gegenüber dem Aufnahmeabschnitt (3) nach außen gebogen ist, so dass bei einer nach innen gerichteten Deformation des Verkleidungsteils (2) die Abweiserblende (9) nach außen ausweicht.

5. Haltevorrichtung nach Anspruch 4, **dadurch gekennzeichnet, dass** die Abweiserblende (9) in einem Winkel α nach außen abknickt, wobei der Winkel α vorzugsweise 10° bis 60°, weiter vorzugsweise 20° bis 35°, weiter vorzugsweise 25° bis 32° beträgt.

6. Haltevorrichtung nach Anspruch 4, **dadurch gekennzeichnet, dass** die Abweiserblende (9) mit einem Radius (R) nach außen gebogen ist, vorzugsweise mit einem Wert zwischen 25 mm und 180 mm, weiter vorzugsweise mit einem Wert zwischen 40 mm und 85 mm.

7. Haltevorrichtung nach einem der vorstehenden Ansprüche, **dadurch gekennzeichnet, dass** die Abweiserblende (9) und/oder der Fügeabschnitt (5) einstückig an den Aufnahmeabschnitt (3) angeformt ist oder sind.

8. Haltevorrichtung nach einem der vorstehenden Ansprüche, **dadurch gekennzeichnet, dass** der Mindestabstand (X) im Bereich von 2 mm bis 30 mm, vorzugsweise im Bereich von 5 mm bis 25 mm liegt.

9. Haltevorrichtung nach einem der vorstehenden Ansprüche, **dadurch gekennzeichnet, dass** zumindest der Fügebereich (5') aus einem laserverschweißbaren polymerem Material besteht.

10. Haltevorrichtung nach einem der vorstehenden Ansprüche, **dadurch gekennzeichnet, dass** der Fügebereich (5') eine gegenüber dem Verbindungselement (8) und/oder dem Aufnahmeabschnitt (3) verringerte Wandstärke aufweist, wobei die reduzierte Wandstärke vorzugsweise im Bereich von 0,5 mm bis 1,5 mm liegt.

11. Haltevorrichtung nach einem der vorstehenden Ansprüche 4 bis 10, **dadurch gekennzeichnet, dass** die Wandstärke der Abweiserblende (9) in einem Bereich von 0,5 mm bis 2,5 mm, vorzugsweise im Bereich von 0,7 mm bis 1,5 mm, weiter vorzugsweise im Bereich von 0,8 mm bis 1,3 mm liegt.

12. Haltevorrichtung nach einem der vorstehenden Ansprüche 4 bis 11, **dadurch gekennzeichnet, dass** die Abweiserblende (9) im Übergangsbereich (11) zum Aufnahmeabschnitt (3) eine Materialschwächung (12) aufweist.

13. Verkleidungsteil (2) mit einer Haltevorrichtung nach einem der Ansprüche 1 bis 12.

14. Verkleidungsteil (2) nach Anspruch 13 mit einer Elektronikeinheit (1), wobei die Elektronikeinheit (1) einen Sensor, einen Sender, einen Messfühler, ein Steuergerät, eine Kamera und/oder eine Radareinheit umfasst.

15. Verkleidungsteil (2) nach Anspruch 13 oder 14, **dadurch gekennzeichnet, dass** das Verkleidungsteil (2) eine Stoßfängerverkleidung oder eine Türverkleidung oder eine Heckklappenverkleidung oder eine Kotflügelverkleidung ist.

## Claims

1. A holding device made of a polymeric material for holding and securing an electronic unit (1) behind a trim part (2) of a motor vehicle, said trim part (2) being formed using a polymeric material, having:
- a holding section (3) comprising at least one securing means (4) for securing the electronic unit (1) in or on the holding section (3),
- at least one joining section (5) arranged next to the holding section (3) having a joining region (5'), **characterised in that** the joining section (5) can be connected to the inside (7) of the trim part (2) opposite the visible side (6) via the holding section (3)
- wherein the joining section (5) further comprises a connecting element (8) to the holding section (3), which connecting element (8) is configured such that, in the assembled state of the holding device, the electronic unit (1) is at a defined minimum distance (X) from the inside (7) of the trim part (2),
wherein
the connecting element (8) comprises a spring action section (21), which allows a longitudinal stretching of the connecting element (8) parallel to the longitudinal extension direction of the trim part (2).

2. The holding device according to claim 1, **characterised in that** the spring action section has a U-shaped or wave-shaped cross-section.

3. The holding device according to one of claims 1 or 2, **characterised in that** at least the spring action section is formed using a further polymeric material, said further polymeric material having material properties that are more elastic than those of the polymeric material of the connecting element.

4. The holding device according to one of the preceding claims, **characterised in that** on the holding section (3) a deflector panel (9) is arranged which, in the assembled state of the holding device, extends towards the inside (7) of the trim part (2) and is curved outwards relative to the holding section (3) so that, in the event of a deformation of the trim part (2) directed inwards, the deflector panel (9) deflects outwards.

5. The holding device according to claim 4, **characterised in that** the deflector panel (9) bends outwards at an angle α, the angle α preferably being 10° to 60°, more preferably 20° to 35°, more preferably 25° to 32°.

6. The holding device according to claim 4, **characterised in that** the deflector panel (9) is curved outwards with a radius (R), preferably having a value of between 25 mm and 180 mm and more preferably having a value of between 40 mm and 85 mm.

7. The holding device according to one of the preceding claims, **characterised in that** the deflector panel (9) and/or the joining section (5) is or are integrally moulded on to the holding section (3).

8. The holding device according to one of the preceding claims, **characterised in that** the minimum distance (X) is in the range of 2 mm to 30 mm and preferably in the range of 5 mm to 25 mm.

9. The holding device according to one of the preceding claims, **characterised in that** at least the joining region (5') consists of a laser-weldable polymeric material.

10. The holding device according to one of the preceding claims, **characterised in that** the joining region (5') has a reduced wall thickness compared to the connecting element (8) and/or the holding section (3), the reduced wall thickness preferably being in the range of 0.5 mm to 1.5 mm.

11. The holding device according to one of the preceding claims 4 to 10, **characterised in that** the wall thickness of the deflector panel (9) is in a range of 0.5 mm to 2.5 mm, preferably in the range of 0.7 mm to 1.5 mm and more preferably in the range of 0.8 mm to 1.3 mm.

12. The holding device according to one of the preceding claims 4 to 11, **characterised in that** the deflector panel (9) has a material weakening (12) in the transition region (11) to the holding section (3).

13. A trim part (2) having a holding device according to one of claims 1 to 12.

14. The trim part (2) according to claim 13 having an electronic unit (1), wherein the electronic unit (1) comprises a sensor, a transmitter, a measuring probe, a control device, a camera and/or a radar unit.

15. The trim part (2) according to claim 13 or 14, **characterised in that** the trim part (2) is a bumper trim or a door trim or a tailgate trim or a wing trim.

## Revendications

1. Dispositif de maintien constitué d'un matériau polymère, destiné au logement et à la fixation d'une unité électronique (1) derrière une pièce de revêtement (2) d'un véhicule automobile, formée dans un matériau polymère, comprenant :
- une section de logement (3) présentant au moins un moyen de fixation (4) pour la fixation de l'unité électronique (1) dans ou sur la section de logement (3),
- au moins une section de jonction (5) disposée à côté de la section de logement (3), comprenant une zone de jonction (5), **caractérisé en ce que** la section de jonction (5) est raccordable au côté intérieur (7) de la pièce de revêtement (2), opposé au côté visible (6) par l'intermédiaire de la section de logement (3),
- la section de jonction (5) présentant en outre un élément de liaison (8) vers la section de logement (3), lequel est réalisé de manière à ce que l'unité électronique (1), à l'état de montage du dispositif de maintien, présente un écart minimal (X) défini par rapport au côté intérieur (7) de la pièce de revêtement (2),
l'élément de liaison (8) présentant une section de suspension (21) qui permet une extension en longueur de l'élément de liaison (8) parallèlement à la direction d'étendue longitudinale de la pièce de revêtement (2).

2. Dispositif de maintien selon la revendication 1, **caractérisé en ce que** la section de suspension présente une section transversale en forme de U ou une section transversale ondulée.

3. Dispositif de maintien selon l'une quelconque des revendications 1 ou 2, **caractérisé en ce qu'**au moins la section de suspension est formée dans un matériau polymère supplémentaire, le matériau polymère supplémentaire présentant des caractéristiques de matériau plus élastiques que le matériau polymère de l'élément de liaison.

4. Dispositif de maintien selon l'une quelconque des revendications précédentes, **caractérisé en ce qu'**un panneau déflecteur (9) est disposé sur la section de logement (3), lequel, à l'état de montage du dispositif de maintien, s'étend en direction du côté intérieur (7) de la pièce de revêtement (2) et est cintré vers l'extérieur par rapport à la section de logement (3), de sorte que lors d'une déformation de la pièce de revêtement (2), dirigée vers l'intérieur, le panneau déflecteur (9) dévie vers l'extérieur.

5. Dispositif de maintien selon la revendication 4, **caractérisé en ce que** le panneau déflecteur (9) est plié vers l'extérieur dans un angle a, l'angle α étant de préférence de 10° à 60°, en outre de préférence de 20° à 35°, en outre de préférence de 25° à 32°.

6. Dispositif de maintien selon la revendication 4, **caractérisé en ce que** le panneau déflecteur (9) est plié vers l'extérieur avec un rayon (R), de préférence avec une valeur comprise entre 25 mm et 180 mm, en outre de préférence avec une valeur comprise entre 40 mm et 85 mm.

7. Dispositif de maintien selon l'une quelconque des revendications précédentes, **caractérisé en ce que** le panneau déflecteur (9) et/ou la section de jonction (5) est formé ou sont formés d'une seule pièce sur la section de logement (3).

8. Dispositif de maintien selon l'une quelconque des revendications précédentes, **caractérisé en ce que** l'écart minimal (X) est situé dans la plage de 2 mm à 30 mm, de préférence dans la plage de 5 mm à 25 mm.

9. Dispositif de maintien selon l'une quelconque des revendications précédentes, **caractérisé en ce qu'**au moins la zone de jonction (5) est constituée d'un matériau polymère pouvant être soudé au laser.

10. Dispositif de maintien selon l'une quelconque des revendications précédentes, **caractérisé en ce que** la zone de jonction (5) présente une épaisseur de paroi réduite par rapport à l'élément de liaison (8) et/ou à la section de logement (3), l'épaisseur de paroi réduite étant située de préférence dans la plage de 0,5 mm à 1,5 mm.

11. Dispositif de maintien selon l'une quelconque des revendications 4 à 10, **caractérisé en ce que** l'épaisseur de paroi du panneau déflecteur (9) est située dans une plage de 0,5 mm à 2,5 mm, de préférence dans la plage de 0,7 mm à 1,5 mm, en outre de préférence dans la plage de 0,8 mm à 1,3 mm.

12. Dispositif de maintien selon l'une quelconque des revendications 4 à 11, **caractérisé en ce que** le panneau déflecteur (9) présente un affaiblissement de matériau dans la zone de transition (11) vers la section de logement (3).

13. Pièce de revêtement (2) comprenant un dispositif de maintien selon l'une quelconque des revendications 1 à 12.

14. Pièce de revêtement (2) selon la revendication 13, dotée d'une unité électronique (1), l'unité électronique (1) comprenant un capteur, un émetteur, une sonde de mesure, un appareil de commande, une caméra et/ou une unité de radar.

15. Pièce de revêtement (2) selon la revendication 13 ou 14, **caractérisée en ce que** la pièce de revêtement (2) est un revêtement de pare-chocs ou un revêtement de portière ou un revêtement de hayon ou un revêtement d'aile.
